# EUROPEAN PATENT SPECIFICATION

(11) **EP 2 192 153 B1**
(45) Date of publication and mention of the grant of the patent: **18.06.2014**
(21) Application number: 09014661.4
(22) Date of filing: 25.11.2009
(51) Int. Cl.: C08L 33/02, C08L 3/02, C08K 3/20

(54) **Binder-consolidated textile fabric, method for producing it, and use thereof**
Mit Bindemittel verfestigtes Textilgewebe, Verfahren zu dessen Herstellung und dessen Verwendung
Tissu textile consolidé par un liant, son procédé de production, et son utilisation

(30) Priority: 26.11.2008 DE 102008059128
(43) Date of publication of application: 02.06.2010
(73) Proprietor: Johns Manville Europe GmbH, 86399 Bobingen (DE)
(72) Inventor: Rempt, Elvira, 97877 Wertheim (DE); Eckert, Bernhard, 97896 Freudenberg-Boxtal (DE); Graßl, Thomas, 97204 Höchberg (DE); Gröger, Stephan, 97877 Wertheim (DE)
(74) Representative: Mai, Dörr, Besier

(56) References cited:
- EP-A1- 0 649 870
- EP-A2- 0 409 788
- US-A- 3 575 868

## Description

The invention relates to novel binder systems for consolidating textile fabrics, textile fabrics consolidated therewith, their manufacture as well as products containing the binder system or a textile surface fitted therewith.

Textile fabrics, in particular those which are used as inserts for the manufacture of coated materials, have to meet various requirements. Examples of the use of such inserts are, among others, textile backings for carpets, textile reinforcements in PVC floorings or roofing sheets.

When used in the manufacture of roofing sheets, the used inserts or lining materials must have a sufficient mechanical stability, such as good perforation strength and good tensile strength, which appear, for example, during further processing, such as bituminization or laying. In addition, there is a need for high resistance to thermal stress, for example during bituminization, or to radiant heat and spreading fire.

When used in the manufacture of coated floorings, such as PVC floorings, additional demands are made on such inserts. In this field of application, said inserts not only have to meet the mechanical/thermal requirements but they have to avoid the formation of gaseous substances, since otherwise blistering can be observed during manufacture, for example by the formation of water vapour. Such blistering is very problematic and leads to yield loss and/or poor quality.

In addition to the aforementioned technical requirements, the environmental compatibility and/or new legal regulations account for the need to replace existing, partly already well-functioning systems by new compliant systems. Examples thereof are new industrial standards, such as the DIN EN 14041, or changes in legal providsions, such as the REACH regulation.

The binder systems used so far for consolidating textile fabrics are based upon thermoplastic and/or duroplastic binder systems. Examples thereof are aminoplasts and binders on the basis of acrylates.

There is hence a great need to provide novel binder systems for consolidating textile fabrics to be used as inserts which, on the one hand, meet the technical requirements and the legal regulations, and on the other hand, are available under economic aspects.

It was therefore the object of the present invention to provide novel binder systems for consolidating textile fabrics which, on the one hand, meet the technical requirements and the legal regulations, and on the other hand, are available under economic aspects. Another object is the processability of the binder systems by means of the known and established methods so that investments can be kept at a low level.

The subject matter of the present invention is the use of a binder system as defined in claim 1 for the consolidation of textile fabrics.

Another subject matter of the present invention is a textile fabric as defined in claim 12.

In a preferred embodiment of the present invention, the proportion of the component b) is at least 5 % by weight, in particular at least 10 % by weight, polyvinyl acetate.

In another preferred embodiment, the total of the components a) to b) is up to 60 % by weight, wherein the ratio (parts per weight) of the component a) to the component b) is between 1:1 and 3:1, most preferably 1.01:1 to 2:1, in particular 1.1:1 to 1.6:1.

In a preferred embodiment of the present invention, the proportion of the component c) is at least 5 % by weight, in particular at least 10 % by weight, most preferably at least 25 % by weight.

The quantity of the binder system of the invention applied to the textile fabric is preferably between 5 and 35 % by weight dry binder, in particular 10 and 30 % by weight, most preferably 10 and 25 % by weight dry binder after drying referring to the total weight of the untreated textile fabric.

If the binder system used according to the invention shall be utilized as an aqueous dispersion or solution, the solids content is preferably between 30 and 70 % by weight, in particular between 35 and 65 % by weight, most preferably 40 to 60 % by weight (determined according to DIN EN ISO 3251).

If the binder system used according to the invention shall be utilized as an aqueous dispersion or solution, the viscosity is preferably 10 to 3000 mPa*s, in particular 100 to 3000 mPa*s, most preferably 900 to 2500 mPa*s (determined according to DIN EN ISO 2555 and 23 °C).

The textile fabric consolidated by means of the binder system of the invention surprisingly has a sufficient mechanical strength compared to textile fabrics only consolidated by means of components a), but is more economically advantageous to manufacture. The same applies to the good heat distortion temperature which, despite of the exchange of considerable portions of the component a) with the components b) and/or c), is also maintained.

Beyond that, the binder system of the invention is only slightly hygroscopic so that no restrictions on the use of the consolidated textile fabrics as lining materials in the manufacture of PVC floorings, for example by blistering, can be observed.

Likewise surprising is the ageing behaviour of the consolidated textile fabric which is almost constant even though a person skilled in the art would expect a worsening of the ageing behaviour.

Compared to a textile fabric which only contains starch as binder component c), the textile fabric consolidated according to the invention is improved or at least equivalent with regard to its hygroscopic behaviour, strength, ageing behaviour and flexibility.

Considerable cost saving effects are achieved by the partial replacement by starch and/or polyvinyl acetate, wherein, besides starch, also amphoteric hydroxides, kaolin and mixtures thereof, also with starch, can be used. In addition, a binder system completely free of formaldehyde is obtained without being obliged to cut back on the product properties. Surprisingly, the product properties are even improved in some areas. The sealing properties, for example, are improving, i.e., the air permeability is reduced.

The polymerisates on the basis of carbonic acid which are used according to the invention as the component a) and can be cross-linked by means of a cross-linking agent are known as such (e.g., they can be seen from the data sheets).

The polymerisates on the basis of carbonic acid which are used according to the invention and can be cross-linked by means of a cross-linking agent are preferably polycarboxylic acids, in particular polyacrylates which are thermally cross-linked by means of a polyvalent alcohol. The use of a polyvalent alcohol causes a cross-linking reaction and the formation of the precipitate with the carbonic acid.

Polycarboxylic acids which may additionally be modified are preferably used as carbonic acids. The polycarboxylic acids may have unsaturated constituents and/or be used as a mixture with unsaturated monomeric carbonic acid constituents. The unsaturated monomeric carbonic acid constituents are preferably compounds capable of forming acrylates or polyacrylates.

Polymers on the basis of acrylic acid monomers and/or modified acrylic acid monomers, in particular methacrylic acid monomers, are preferred as polyacrylates.

The component a) of the binder system used according to the invention preferably contains up to 30 % by weight of a cross-linking agent. The type of the cross-linking agent and its proportion depend on the selected components and are known to the person skilled in the art. The ratio carbonic acid, in particular polyacrylate, to alcohol is adjustable in a wide range depending on the desired degree of consolidation or cross-linking.

Preferred cross-linking agents are polyols, polyamines, polyalkanolamines or their mixtures.
Among the polyols, glycols, glycol ethers, polyester polyols, polyether polyols, polysaccharides, polyvinyl alcohols or their mixtures are preferred. Trimethylolpropane, pentaerythritol, ethylene glycole, propylene glycol, triethylene glycol, glycerol and sugar alcohols, such as sorbite and inositol, are particularly preferred polyols. Besides the aforementioned polyols, polyvalent alcohols can also be used as cross-linking agents. The term polyvalent alcohols refers to alcohols having at least two hydroxyl groups which can be branched or straight-chained. The alocohols/polyols can also be used as a mixture, i.e., a mixture of two different alcohols or polyols.
Among the polyamines, hexanediamine, ethylenediamine, melamine, diethylenetriamine, triethylenetetramine, aminoanilin, aminoamides, or their mixtures are preferred.
Among the polyalkanolamines, alkanolamines, in particular monoethanolamine, diethanolamine, triethanolamine, or their mixtures are preferred.

The polymerisates on the basis of polycarbonic acid which are used according to the invention and can be cross-linked by means of a cross-linking agent are commercially available from BASF SE, for example, under the name Acrodur® as an aqueous dispersion or solution.

If the component a) of the binder system of the invention shall be used as an aqueous polymer dispersion, conventional and known emulsifying agents or protective colloids can be added for stabilization. These are known to the person skilled in the art (cf. Houben-Weyl, Methoden der org. Chemie, vol. XIV/1, 1961, Stuttgart). Examples of emulsifying agents are polyglycolethers, fatty alcohol-polyglycolethers, phosphoric esters and their salts, sulphonated paraffin hydrocarbons, higher alkylsulphates (such as lauryl sulphate), alkali metal salts of fatty acids, such as sodium stearate or sodium oleate, sulphuric acid semi-ester of ethoxylated fatty acid alcohols, salts of esters and semi-esters of alkyl polyoxyethylene sulfosuccinates, salts of sulphonated alkyl aromatics, such as sodium dodecyl benzolsulfonate, ethoxylated C4-C12-alkylphenols and their sulphonation products such as ester of the sulfosuccinic acid. Examples of protection colloids are alkylhydroxyalkyl celluloses, partly or completely hydrolyzed polyvinyl alcohols and polyvinyl copolymers of the same, acrylic acid, homopolymers and copolymers and partly neutralized salts of the same, acrylamide copolymers, polyacrylate copolymers and salts of the same, carboxyalkyl cellulose, such as carboxymethyl cellulose and their salts.

The binder system of the invention does not comprise polymerizates produced by polymerization of conjugated aliphatic dienes, in particular butadiene, isoprene, pentadiene-1,3, dimethyl butadiene and/or cyclopentadiene.

If the component a) of the binder system of the invention shall be utilized as an aqueous polymer dispersion or polymer solution, the solids content is preferably between 30 and 70 % by weight, in particular between 35 and 65 % by weight, most preferably 40 to 60 % by weight (determined according to DIN EN ISO 3251).

If the component a) of the binder system of the invention shall be utilized as an aqueous polymer dispersion, the viscosity is preferably 10 to 3000 mPa*s, in particular 100 to 3000 mPa*s, most preferably 900 to 2500 mPa*s (determined according to DIN EN ISO 2555 and 23 °C).

If the component a) of the binder system of the invention shall be utilized as an aqueous polymer dispersion, the pH-value (measured as a 10 % by weight solution in water) is between 2 and 5, preferably between 2.5 and 4.5 (determined according to DIN EN ISO 976).

The polyvinyl acetates used according to the invention as component b) are known as such. Polyvinyl acetates are understood as homopolymers of the vinyl acetate and co- or terpolymerisates of the vinyl acetate with acrylic acid, acrylates, crotonic acid, vinyl laurate, vinyl chloride or ethylene.

Homopolymers preferably used are those of the polyvinyl acetate which contain up to 5 mole % further constituents which derive from other monomers than vinyl acetate.

The glass temperature of the polyvinyl acetate used according to the invention is preferably 18 to 45 °C and depends on the degree of polymerization.

The degree of polymerization of the polyvinyl acetate used according to the invention is preferably 100 to 5000.

The molecular weight (weight-average) of the polyvinyl acetate used according to the invention is preferably between 10000 and 1500000 g/mol.

The polyvinyl acetates used according to the invention are commercially available from Celanese, for example, under the name Mowilith® DN 60 as an aqueous dispersion or solution.

If the component b) of the binder system of the invention shall be used as an aqueous polymer dispersion, conventional and known emulsifying agents or protective colloids can be added for stabilization. These are known to the person skilled in the art (cf. Houben-Weyl, Methoden der org. Chemie, vol. XIV/1, 1961, Stuttgart). Examples of emulsifying agents are polyglycolether, fatty alcohol-polyglycolether, phosphoric ester and their salts, sulphonated paraffin hydrocarbons, higher alkylsulphates (such as lauryl sulphate), alkali metal salts of fatty acids, such as sodium stearate or sodium oleate, sulphuric acid semi-ester of ethoxylated fatty acid alcohols, salts of esters and semi-esters of alkyl polyoxyethylene sulfosuccinates, salts of sulphonated alkyl aromatics, such as sodium dodecyl benzolsulfonate, ethoxylated C4-C12-alkylphenols and their sulphonation products such as ester of the sulfosuccinic acid. Examples of protection colloids are alkylhydroxyalkyl celluloses, partly or completely hydrolyzed polyvinyl alcohols and polyvinyl copolymers of the same, acrylic acid, homopolymers and copolymers and partly neutralized salts of the same, acrylamide copolymers, polyacrylate copolymers and salts of the same, carboxyalkyl cellulose, such as carboxymethyl cellulose and their salts.

If the component b) of the binder of the invention shall be used as an aqueous polymer dispersion, the solids content is preferably between 30 and 70 % by weight, in particular between 35 and 68 % by weight, most preferably 40 to 65 % by weight (determined according to DIN EN ISO 3251).

If the component b) of the binder system of the invention shall be used as an aqueous polymer dispersion, the viscosity is preferably 100 to 20000 mPa*s, in particular 1000 to 20000 mPa*s, most preferably 5000 to 20000 mPa*s (determined according to DIN EN ISO 2555, 23 °C, RVT, spindle no. 6).

The starches used according to the invention are not subject to restrictions, however, they must be compatible with the components a), b) and, as the case may be, with the component d).

Suitable starches of the invention are natural, so-called native starches, and modified starches, such as cationic and anionic starches, or starch derivatives (so-called chemically modified starches). Starches with a sufficient cold and/or heat solubility are generally advantageous.

One group of starches which can be employed within the scope of the invention comprises the starches obtained from vegetable raw materials. These include, among others, starches from tubers, such as potatoes, manioc, arrowroot, batata, from seeds, such as wheat, maize, rye, rice, barley, millet, oats, sorghum, from fruit, such as chestnuts, acorns, beans, peas, and other leguminous vegetables, bananas, and from pith, for example pith from the sago palm.

The starches useable within the scope of the invention essentially consist of amylose and amylopektin in changing proportions.

The molecular weights of the starches useful according to the invention can vary over a wide range. The starches which essentially consist of a mixture of amylose and amylopektin preferably have molecular weights M_{w} in the range between 5x10² and 1x10⁸, most preferably between 5x10⁴and 1x10⁷.

Besides starches of native vegetable origin, starches which are chemically modified, have been obtained by fermentation, are of recombinant origin or have been produced by biotransformation (biocatalysis) are equally preferred.

The term "biotransformation" is interchangeable with the term "biocatalysis".

"Chemically modified starches" means starches whose properties have been chemically modified compared to the natural properties. This is essentially reached by polymer analogous reactions during which starch is treated with monofunctional, bifunctional or polyfunctional reagents or oxidizing agents. In the course of these polymer analogous reactions, the hydroxyl groups of the starch are preferably transformed by etherification, esterification or selective oxidation, or the modification is based on a free-radical-initiated graft copolymerization of copolymerizable unsaturated monomers onto the starch backbone.

Particular chemically modified starches include, among others, starch esters, such as xanthogenates, acetates, phosphates, sulfates, nitrates, starch ethers, such as nonionic, anionic or cationic starch ethers, oxidized starches, such as dialdehyde starch, carboxy starch, persulfate-degraded starches and similar substances.

For the purposes of the present invention, "fermentative starches" are starches obtained by fermentative processes or obtainable by involving, or with assistance from, fermentative processes, using naturally occurring organisms, such as fungi, algae or bacteria. Examples of starches from fermentative processes are, among others, gum arabic and related polysaccharides (gellan gum, ghatti gum, karaya gum, gum tragacanth), xanthan, emulsan, rhamsan, wellan, schizophyllan, polygalacturonates, laminarin, amylose, amylopectin, and pectins.

For the purposes of the invention, "starches of recombinant origin" or "recombinant starches" are starches obtained by fermentative processes or obtainable by involving, or with assistance from, fermentative processes, using organisms which do not occur naturally, but with the aid of naturally occurring organisms modified with the aid of genetic engineering techniques, for example fungi, algae or bacteria. Examples of starches from fermentative, genetically modified processes are, among others, amylose, amylopectin and polyglucans.

Within the context of the present invention, "starches prepared by biotransformation" means that starches, amylose, amylopectin or polyglucans are produced by a catalytic reaction of monomeric basic components, generally of oligomeric saccharides, in particular of mono- or disaccharides, by using a biocatalyst (or: enzyme) under specific conditions. Examples of starches from biocatalytic processes are, among others, polyglucan and modified polyglucans, polyfructan and modified polyfructans.

Furthermore, derivates of the individual starches mentioned are also encompassed by the invention. For the purposes of the present invention, the terms "derivatives of starches" or "starch derivatives" very generally are modified starches, i.e., starches whose properties have been altered by changing the natural amylose/amylopectin ratio or carrying out a pregelatinisation, a partial hydrolytic degradation or a chemical derivatisation.

Examples of particular derivatives of starches are, among others, oxidized starches, e.g., dialdehyde starches or other oxidation products with carboxyl functions, or native ionic starches (e.g., with phosphate groups) or starches which have been further modified ionically, wherein this term covers both anionic and cationic modifications.

The destructured starches which can be used within the context of the invention include those which have been homogenized using, for example, glycerol, so that crystalline reflections are no longer visible in X-ray diffraction and starch grains or birefringent regions are no longer visible under a polarizing microscope at a magnification of one thousand. In this connection reference is made to DE A1-3931363, the disclosure of which in relation to the destructured starches is incorporated into this description by reference.

The starches used according to the invention are commercially available from Avebe, Cargill, National Starch, Penford Products Co, Purac or Südstärke, for example.

Particularly advantageous are starches with a sufficient cold solubility and/or a sufficient heat solubility. A sufficient solubility is given if the viscosity of the binder system of the invention permits a corresponding processability.

In a particular embodiment of the present invention, the component c) has at least two constituents selected from the group of starch, amphoteric hydroxides and kaolin. Particularly preferred combinations are starch and amphoteric hydroxides, wherein the ratios of 1:10 to 10:1 (parts per weight) prove to be particularly preferred.

The binder system used according to the invention may further contain up to 10 % by weight additives. These are commercially available additives such as preservatives, stabilizers, antioxidants, antifoaming agents, hydrophobizing agents, UV stabilizers, fillers and/or pigments. These are partly contained in the commercial products and serve for the storage and transport stabilization or can be added afterwards in order to meet the specifications of the customer.

In this description, the term "textile fabric" has to be understood in its widest meaning. It may be used for all structures composed of fibres which have been manufactured according to a surface forming method. The fibre forming materials are natural fibres, mineral fibres, glass fibres, fibres composed of synthetic products and/or fibres composed of synthesized polymers. For the purposes of the present invention, textile fabrics are notably understood as woven fabrics, yarn sheets, knitted fabrics or non-woven fabrics, in particular as non-woven fabrics.

Textile fabrics on the basis of mineral fibres and/or glass fibres are in particular non-woven fabrics on the basis of mineral fibres and/or glass fibres. The aforementioned non-woven fabrics on the basis of mineral fibres and/or glass fibres may be combined with other textile fabrics, in particular with non-woven fabrics.

The employed non-woven fabrics composed of glass fibres or mineral fibres can be manufactured by means of any known method. Non-woven fabrics composed of glass fibres which have been manufactured by means of the wet laid process, the dry laid process or the air laid process are particularly suitable. In the course of the manufacturing process, in particular the wet laid process, these non-woven fabrics may contain small proportions of chemical auxiliary substances as a result of the process, for example thickening agents, antifoaming agents, etc. These substances originate from the circulation water required for the manufacture of non-woven fabrics.

The non-woven fabrics composed of mineral fibres which are used according to the invention can be consolidated by means of the binder system of the invention and additionally by mechanical methods, e.g., needling or hydrodynamic needling. They are most preferably carded non-wovens composed of filaments, i.e., endlessly long fibres, or of staple fibres. The average diameter of the mineral fibres is between 8 and 15 µm, preferably between 10 and 12 µm.

Suitable mineral fibres include aluminosilicate fibres, ceramic fibres, dolomite fibres, or fibres of vulcanite, such as basalt, diabase, melaphyre. Diabases and melaphyres. These are commonly referred to as palaeobasalts; alternatively diabase is gladly called greenstone.

The weight per unit area of the non-woven materials composed of mineral fibres which are used according to the invention is between 20 and 350 g/m², preferably between 25 and 90 g/m². The above details do also apply to the glass mats described below.

The glass fibre mats used according to the invention can be consolidated by means of binders or by mechanical methods, e.g., needling or hydrodynamic needling. The glass fibres may be filaments or finite or cut glass fibres, wherein in the last case the length of the fibres is between 1 and 40 mm, preferably 4 to 20 mm. The average diameter of the glass fibres is between 6 and 20 µm, preferably between 8 and 15 µm.

Suitable glass fibres include glass types such as E-glass, S-glass, R-glass or C-glass, wherein E-glass or C-glass is preferred for economic reasons.

Among the textile fabrics on the basis of synthetic polymers, non-woven materials composed of fibres from synthetic polymers, in particular spunbonded fabrics, so-called spunbonds, which are produced by random deposition of freshly melt-spun filaments, are preferred. They consist of continuous synthetic fibres composed of melt-spinnable polymer materials. Suitable polymer materials include, for example, polyamides, such as polyhexamethylenediadipamide, polycaprolactam, aromatic or partly aromatic polyamides ("aramids"), aliphatic polyamides, such as nylon, partly or wholly aromatic polyesters, polyphenylene sulfide (PPS), polymers having ether and keto groups, such as polyetherketones (PEKs) and polyetheretherketone (PEEK), polyolefines, such as polyethylene or polypropylene, or polybenzimidazoles.

The spunbonded fabrics preferably consist of melt-spinnable polyesters. The polyester material can, in principle, be any known type suitable for the fibre production. Such polyesters consist predominantly of components derived from aromatic dicarboxylic acids and from aliphatic diols. Commonly used aromatic dicarboxylic acid components are bivalent residues of benzenedicarboxylic acids, especially of terephthalic acid and of isophthalic acid; commonly used diols have 2 to 4 carbon atoms, wherein ethylene glycol is particularly suitable. Spunbonded fabrics which consist of at least 85 mole % polyethylene terephthalate are particularly advantageous. The remaining 15 mole % are composed of dicarboxylic acid units and glycol units which act as so-called modifying agents and which enable the person skilled in the art to influence the physical and chemical properties of the produced filaments in a targeted manner. Examples of such dicarboxylic acid units are the residues of isophthalic acid or of aliphatic dicarboxylic acid, such as glutaric acid, adipic acid, sebacic acid; examples of modifying diol residues are those of diols having longer chains, for example of propanediol or butanediol, of di- or triethylene glycol or, if present in a small amount, of polyglycol having a molecular weight of about 500 to 2000.

Particular preference is given to polyesters containing at least 95 mole % polyethylene terephthalate (PET), especially those composed of unmodified PET.

The filament titre of the polyester filaments in spunbonded fabrics is between 1 and 16 dtex, preferably 2 to 8 dtex.

In another embodiment of the invention, the textile surface or the spunbonded fabric can also be a non-woven fabric consolidated by means of a melt binder which contains substrate fibres and melt bonding fibres. Said substrate fibres and melt bonding fibres can be derived from any thermoplastic filament-forming polymers. Beyond that, substrate fibres can be derived from non-fusing filament-forming polymers. Such spunbonded fabrics which have been consolidated by means of a melt binder are described, for example, in EP-A-0,446,822 and EP-A-0,590,629.

In a preferred embodiment of the invention, the textile fabric has been mechanically and chemically consolidated by means of the binder system of the invention. Such a consolidation further improves the application properties of the lining material.

The textile fabric may have a single-layer or multi-layer structure.

The total weight per unit area of the textile fabric, in particular of the spunbonded fabric, is between 20 and 500 g/m², preferably between 40 and 400 g/m², in particular between 90 and 250 g/m².

In a further embodiment of the invention, such textile fabrics have at least one reinforcement, in particular if they are used as lining materials. This reinforcement is preferably designed so as to absorb a force so that in the force-elongation-diagram (at 20 °C), the reference force of the lining material with reinforcement compared to the lining material without reinforcement differs in the range between 0 und 1 % elongation at least at one location by at least 10 %.

In another embodiment, the reinforcement can be incorporated in such a way that, due to the reinforcement, forces are only absorbed at higher elongations.

Multifilaments and/or monofilaments on the basis of aramids, preferably so-called high-modulus aramid fibres, carbon, glass, glass rovings, mineral fibres (basalt), high strength polyester monofilaments or multifilaments, high strength polyamide monofilaments or multifilaments, as well as so-called hybrid multifilament yarns (yarns containing reinforcing fibres and lower melting binding fibre) or wires (monofilaments) composed of metals or metal alloys are preferably used as reinforcing filaments.

For economic reasons, preferred reinforcements consist of glass multifilaments in the form of essentially parallel yarn sheets or scrims. Mostly the reinforcement is done in the longitudinal direction of the non-woven fabrics by essentially parallel running yarn sheets.

The reinforcing filaments may be used as such or in the form of a discrete textile fabric, for example as a woven fabric, a scrim, a knitted fabric or a non-woven fabric. Reinforcements with reinforcing yarns running parallel to each other, that is, warp sheets, as well as scrims or woven fabrics are preferred.

The measurement of the reference force is carried out in conformity with EN 29073, part 3, on 5 cm wide samples at a restraint length of 200 mm. Here, the numerical value of the pretension, given in centinewton, equals the numerical value of the mass per unit area of the sample, given in gram per square meter.

The reinforcement can be carried out by installing the reinforcements in the textile fabric, on at least one side of the textile fabric or at any location of the lining material, in particular in further textile fabrics which are different from the first textile fabric or as a discrete textile fabric.

The lining materials of the invention which contain the textile fabric consolidated according to the invention may be equipped with further functional layers. This means steps or functional layers which increase the resistance to penetration of roots of the lining material, for example. Said steps and functional layers are also a subject-matter of the invention.

The lining material of the invention may comprise further textile fabrics besides the textile fabric of the invention already described. These further textile fabrics are preferably different from the textile fabrics mentioned first, i.e., they are made of another material.

If the textile fabric is made up of synthetic polymers, it may be necessary to install further textile fabrics in the lining material of the invention in order to optimize the application properties.

It is surprising to the person skilled in the art that the use of the binder system can improve the properties of the textile fabric.

The textile fabric consolidated according to the invention can be used as a lining material itself or in combination with other textile fabrics as a lining material for coated sarking membranes, roofing sheets and water-proof sheetings as well as a textile backing or a textile reinforcement in floorings, in particular carpets and PVC floorings which are also a subject-matter of the invention.

The textile fabric consolidated according to the invention can be used as a lining material itself or in combination with other textile fabrics as a lining material for coated sarking membranes, roofing sheets and water-proof sheetings, preferably for the manufacture of bituminised sarking membranes, roofing sheets and water-proof sheetings. Besides, the lining materials of the invention can be used for flooring applications and in the field of filtration.

Polyethylene or polyvinyl chloride, polyurethane, EPDM or TPO (polyolefins) are used as coating compounds for floorings or carpet backs. Besides that, bitumen is used for the coated sarking membranes, roofing sheets and water-proof sheetings.

The bituminised sheets contain at least one support sheet as described above which is embedded in a bitumen matrix, wherein the weight proportion of the bitumen related to the weight per unit area of the bituminised roofing sheet is preferably 60 to 97 % by weight and that of the spunbonded fabric is 3 to 40 % by weight.

The manufacture of the textile fabrics used according to the invention is carried out by means of known methods and processes. The manufacture of the consolidated textile fabric of the invention is carried out by means of the following steps:
A) generation of a textile fabric and mechanical consolidation thereof, if necessary;
B) application of the binder system of the invention, comprising:
   I) 10 to 70 % by weight polymerisates on the basis of carboxylic acid, in particular polycarboxylic acid, which can be cross-linked by means of a cross-linking agent, and
   II) 0 to 50 % by weight polyvinyl acetate, or
   III) 70 to1 % by weight of an additive, selected from the group of starch, amphoteric hydroxides, kaolin or mixtures thereof, and
   IV) 0 to 10 % by weight additives,
C) drying and consolidation of the binder,
wherein the specified percentages by weight refer to the dry weight of the binder system, i.e., without water.

The generation of the consolidated textile fabric is carried out by means of known methods.

The mechanical consolidation possibly carried out also takes place by means of known methods.

The installation of the possibly present reinforcement is done during or after the generation of the textile fabric or before or during the application of the binder system of the invention. The feeding of the reinforcement and, if necessary, any further thermal treatment during the manufacturing process, are preferably carried out under stress, in particular under longitudinal stress.

The feeding of further textile fabrics which are possibly to install is done before or during the consolidation of the binder system of the invention.

The application process of the binder system according to step B) is also carried out by means of known methods. The applied layer of binder (after drying) is preferably between 5 and 50 % per weight, in particular 10 and 40 % by weight, most preferably 15 and 30 % by weight dry binder referring to the total weight of the untreated textile fabric.

Drying or consolidation of the binder is also carried out by means of methods known to the person skilled in the art, wherein temperatures of 160 °C to 210 °C prove to be advantageous. The drying or consolidation process causes among other things the condensation of the cross-linking agent with the carbonic acid with formation of the corresponding condensates.

The individual procedure steps on their own are known. In the combination and order of the invention and with the use of the binder system of the invention, however, they are patentable.

### Examples

A non-woven material composed of glass fibres is manufactured by means of wet laid processes. During these processes, E-glass fibres having a diameter of 10µ and a length of 12 mm are converted to 50 g/m² non-woven materials using standard methods (wet laid process). After the water has been evacuated, the binder of the invention is applied. The applied layer of binder is 24 % per weight referring to the total weight of the non-woven fabric after final drying.

Stakote 6258 has been used for the starch component. PVA has been procured from Celanese as Mowilith. Kaolin Huber 90 has been used as filler.

### Results of measurement:

The specific strength is a measure for the influence of the binder onto the strength of the non-woven material: Fₛ = (BW (I) + BF (q)) / G_{b}.

The tensile strength BW (lengthwise, crosswise) corresponds to the tear strength which, according to DIN EN 29 073-3, is measured on samples of 5 cm width and 30 cm length. The binder weight G_{b} corresponds to the applied layer of binder in g/m².

The hot strength is a measure for the longitudinal strength of the non-woven material at 200 °C. The strength is determined according to DIN EN 29 073-3, wherein the measurement is carried out at 200 °C in a furnace.

The air permeability is measured according to DIN EN ISO 9237 in [l/m² x s]

| | | Specific strength | Strength (I) | Hot strength (I) | Porosity | Buckling strength |
|---|---|---|---|---|---|---|
| | | [N/g (binder)] | [N/5cm] | [N/5cm] | [l/m²s] | [N/5cm] |
| 1 | Acrodur: 30% PVA: 20% ATH: 50% (Al(OH)₃) | 28 | 180 | 92 | 3120 | 139 |
| 2 | Acrodur 30% PVA: 20% Kaolin: 50% | 24 | 148 | 102 | 2680 | 133 |
| 3 | Starch: 50% Acrodur: 30% PVA: 20% | 30 | 200 | 105 | 2800 | 150 |

## Claims

1. Use of a binder system, comprising:
a) 10 to 70 % by weight polymerisates on the basis of carboxylic acid which can be cross-linked by means of a cross-linking agent, and
b) 0 to 50 % by weight polyvinyl acetate, or
c) 70 to1 % by weight of an additive selected from the group of starch, and
d) 0 to 10 % by weight additives,
wherein the specified percentages by weight refer to the dry weight of the binder system, i.e., without water, for the consolidation of textile fabrics.

2. The use according to claim 1, **characterized in that** component a) is polycarbonic acid, preferably polyacrylate, which can be cross-linked by means of a cross-linking agent.

3. The use according to claim 2, **characterized in that** the polycarboxylic acids have unsaturated constituents and/or are used as a mixture with unsaturated monomeric carbonic acid constituents.

4. The use according to claim 2, **characterized in that** the polyacrylates are polymers on the basis of acrylic acid monomers and/or modified acrylic acid monomers, in particular methacrylic acid monomers.

5. The use according to claim 1, **characterized in that** the cross-linking agent is a polyol, a polyamine, a polyalkanolamine, a polyvalent alcohol or a mixture thereof.

6. The use according to claim 1, **characterized in that** the component b) are homopolymers of the vinyl acetate and co- or terpolymerisates of the vinyl acetate with acrylic acid, acrylates, crotonic acid, vinyl laurate, vinyl chloride or ethylene.

7. The use according to claim 1, **characterized in that** the component b) is a polyvinly acetate whose molecular weight (weight average) is between 10000 und 1500000 g/mol.

8. The use according to claim 1, **characterized in that** the total of the components a) to b) is up to 60 % by weight, wherein the ratio (parts per weight) of the component a) to the component b) is between 1:1 and 3:1, most preferably 1.01:1 to 2:1, in particular 1.1:1 to 1.6:1.

9. The use according to claim 1, **characterized in that** the component c) includes starch and amphoteric hydroxides.

10. The use according to claim 1, **characterized in that** it is a dispersion and that the polymeric solids content of the dispersion, in particular the polymeric solids content of the dispersions, is between 30 and 70 % by weight.

11. The use according to claim 1, **characterized in that** it is a dispersion and that the viscosity of the dispersion is 10 to 3000 mPa*s.

12. A textile fabric which has been consolidated by use of a binder system according to one or more of claims 1 to 11 and comprises
a) 10 to 70 % by weight polycondensates on the basis of carboxylic acid which are cross-linked by means of a cross-linking agent, and
b) 0 to 50 % by weight polyvinyl acetate, or
c) 70 to 1 % by weight of an additive selected from the group of starch and
d) 0 to 10 % by weight additives,
wherein the specified percentages by weight refer to the dry weight of the binder system, i.e., without water, and the applied quantity of the binder system is between 5 and 35 % by weight dry binder referring to the total weight of the untreated textile fabric.

13. The textile fabric according to claim 12, **characterized in that** said textile fabric is a non-woven fabric made of fibres which are composed of synthetic polymers, preferably a spunbonded fabric.

14. The textile fabric according to claim 12, **characterized in that** said textile fabric is a non-woven fabric made of fibres of glass fibres and/or mineral fibres.

15. The textile fabric according to claim 12, **characterized in that** said textile fabric has a total weight per unit area of 20 and 500 g/m².

16. The textile fabric according to claim 12, **characterized in that** the component b) are homopolymers of the vinyl acetate and co- or terpolymerisates of the vinyl acetate with acrylic acid, acrylates, crotonic acid, vinyl laurate, vinyl chloride or ethylene.

17. The textile fabric according to claim 12, **characterized in that** the component b) is a polyvinly acetate whose molecular weight (weight average) is between 10000 und 1500000 g/mol.

18. The textile fabric according to claim 12, **characterized in that** the total of the components a) to b) is up to 60 % by weight, wherein the ratio (parts per weight) of the component a) to the component b) is between 1:1 and 3:1, most preferably 1.01:1 to 2:1, in particular 1.1:1 to 1.6:1.

19. The textile fabric according to claim 12, **characterized in that** the component c) includes starch and amphoteric hydroxides.

20. A lining material for sarking membranes, roofing sheets and water-proof sheetings, textile backings or textile reinforcements in floorings, in particular in carpets and PVC floorings, comprising at least one textile fabric according to one or more of claims 12 to 19.

21. The lining material according to claim 20, **characterized in that** it has at least one additional reinforcement.

22. A coated sarking membrane, roofing sheet and water-proof sheeting, comprising at least one coating compound and at least one textile fabric according to one or more of claims 12 to 19 or a lining material according to one of claims 20 or 21.

23. A flooring, in particular a carpet or a PVC flooring, comprising a textile backing or a textile reinforcement comprising at least one textile fabric according to one or more of claims 12 to 19 or a lining material according to one of claims 20 or 21.

## Patentansprüche

1. Verwendung eines Bindemittelsystems, enthaltend:
a) 10 bis 70 Gew.% Polymerisate auf Grundlage von Carbonsäure, die mittels eines Quervernetzungsmittels quervernetzt werden kann und
b) 0 bis 50 Gew.% Polyvinylacetat oder
c) 70 bis 1 Gew.% eines Zusatzstoffs ausgewählt aus der Gruppe aus Stärke und
d) 0 bis 10 Gew.% Zusatzstoffe,
wobei sich die angegebenen Gewichtsprozente auf das Trockengewicht des Bindemittelsystems beziehen, d.h. ohne Wasser, zur Festigung von textilen Strukturen.

2. Verfahren nach Anspruch 1, **dadurch gekennzeichnet, dass** Komponente a) Polykohlensäure ist, vorzugsweise Polyacrylat, die mittels eines Quervernetzungsmittels quervernetzt werden kann.

3. Verwendung nach Anspruch 2, **dadurch gekennzeichnet, dass** die Polycarbonsäuren ungesättigte Bestandteile aufweisen und/oder als Gemisch mit ungesättigten monomeren Kohlensäurebestandteilen verwendet werden.

4. Verwendung nach Anspruch 2, **dadurch gekennzeichnet, dass** die Polyacrylate Polymere auf Grundlage von Acrylsäuremonomeren und/oder modifizierten Acrylsäuremonomeren sind, insbesondere Methacrylsäuremonomeren.

5. Verwendung nach Anspruch 1, **dadurch gekennzeichnet, dass** das Quervernetzungsmittel ein Polyol, ein Polyamin, ein Polyalkanolamin, ein polyvalenter Alkohol oder ein Gemisch davon ist.

6. Verwendung nach Anspruch 1, **dadurch gekennzeichnet, dass** die Komponente b) Homopolymere des Vinylacetats sind und Co- oder Terpolymerisate des Vinylacetats mit Acrylsäure, Acrylaten, Crotonsäure, Vinyllaurat, Vinylchlorid oder Ethylen.

7. Verwendung nach Anspruch 1, **dadurch gekennzeichnet, dass** die Komponente b) ein Polyvinylacetat ist, dessen Molekulargewicht (Gewichtsdurchschnitt) zwischen 10000 und 1500000 g/mol beträgt.

8. Verwendung nach Anspruch 1, **dadurch gekennzeichnet, dass** die Gesamtmenge der Komponenten a) bis b) bis zu 60 Gew.% beträgt, wobei das Verhältnis (Gewichtsanteile) der Komponente a) zu der Komponente b) zwischen 1:1 und 3:1 beträgt, besonders bevorzugt 1,01:1 bis 2:1, insbesondere 1,1:1 bis 1,6:1.

9. Verwendung nach Anspruch 1, **dadurch gekennzeichnet, dass** die Komponente c) Stärke und amphoterische Hydroxide umfasst.

10. Verwendung nach Anspruch 1, **dadurch gekennzeichnet, dass** es sich um eine Dispersion handelt und dass der Gehalt der Dispersion an polymeren Feststoffen, insbesondere der Gehalt der Dispersionen an polymeren Feststoffen, zwischen 30 und 70 Gew.% beträgt.

11. Verwendung nach Anspruch 1, **dadurch gekennzeichnet, dass** es sich um eine Dispersion handelt und dass die Viskosität der Dispersion 10 bis 3000 mPa*s beträgt.

12. Eine textile Struktur, die unter Verwendung eines Bindemittelsystems nach einem oder mehreren der Ansprüche 1 bis 11 verfestigt wurde und umfassend:
a) 10 bis 70 Gew.% Polykondensate auf Grundlage von Carbonsäure, die mittels eines Quervernetzungsmittels quervernetzt sind und
b) 0 bis 50 Gew.% Polyvinylacetat oder
c) 70 bis 1 Gew.% eines Zusatzstoffs ausgewählt aus der Gruppe bestehend aus Stärke und
d) 0 bis 10 Gew.% Zusatzstoffe,
wobei sich die angegebenen Gewichtsprozente auf das Trockengewicht des Bindemittelsystems beziehen, d.h. ohne Wasser, und die angewandte Menge des Bindemittelsystems zwischen 5 und 35 Gew.% Trockenbindemittel beträgt bezogen auf das Gesamtgewicht der unbehandelten textilen Struktur.

13. Textile Struktur nach Anspruch 12, **dadurch gekennzeichnet, dass** die textile Struktur ein Textilverbundstoff ist, der aus Fasern hergestellt ist, die aus synthetischen Polymeren zusammengesetzt sind, vorzugsweise ein Vliesgewebe.

14. Textile Struktur nach Anspruch 12, **dadurch gekennzeichnet, dass** die textile Struktur ein Textilverbundstoff ist, der aus Fasern von Glasfasern und/oder Mineralfasern hergestellt ist.

15. Textile Struktur nach Anspruch 12, **dadurch gekennzeichnet, dass** die textile Struktur ein Gesamtgewicht pro Einheitsfläche von 20 bis 500 g/m² aufweist.

16. Textile Struktur nach Anspruch 12, **dadurch gekennzeichnet, dass** die Komponente b) Homopolymere des Vinylacetats sind und Co- oder Terpolymerisate des Vinylacetats mit Acrylsäure, Acrylaten, Crotonsäure, Vinyllaurat, Vinylchlorid oder Ethylen.

17. Textile Struktur nach Anspruch 12, **dadurch gekennzeichnet, dass** die Komponente b) ein Polyvinylacetat ist, dessen Molekulargewicht (Gewichtsdurchschnitt) zwischen 10000 und 1500000 g/mol beträgt.

18. Textile Struktur nach Anspruch 12, **dadurch gekennzeichnet, dass** die Gesamtmenge der Komponenten a) bis b) bis zu 60 Gew.% beträgt, wobei das Verhältnis (Gewichtsanteile) der Komponente a) zu der Komponente b) zwischen 1:1 und 3:1 beträgt, besonders bevorzugt 1,01:1 bis 2:1, insbesondere 1,1:1 bis 1,6:1.

19. Textile Struktur nach Anspruch 12, **dadurch gekennzeichnet, dass** die Komponente c) Stärke und amphoterische Hydroxide umfasst.

20. Trägermaterial für Unterspannbahnen, Dachbedeckungen und wasserdichte Dachbahnen, Stützgewebe oder Gewebeverstärkungen in Bodenbelägen, insbesondere in Teppichböden und PVC Bodenbelägen, das mindestens eine textile Struktur nach einem oder mehreren der Ansprüche 12 bis 19 umfasst.

21. Trägermaterial nach Anspruch 20, **dadurch gekennzeichnet, dass** es mindestens eine weitere Verstärkung aufweist.

22. Beschichtete Unterspannbahn, Dachbedeckung und wasserdichte Dachbahn, die mindestens eine Beschichtungsverbindung und mindestens ein textile Struktur nach einem oder mehreren der Ansprüche 12 bis 19 umfasst oder ein Trägermaterial nach einem der Ansprüche 20 oder 21.

23. Bodenbelag, insbesondere Teppichboden oder PVC Bodenbelag, der ein Stützgewebe oder eine Gewebeverstärkung umfasst, das mindestens eine textile Struktur nach einem oder mehreren der Ansprüche 12 bis 19 umfasst oder ein Trägermaterial nach einem der Ansprüche 20 oder 21.

## Revendications

1. Utilisation d'un système à liant, comprenant
a) 10 à 70% en poids de polymérisats sur la base d'acide carboxylique qui peut être réticulé par moyen d'un agent de réticulation, et
b) 0 à 50% en poids d'acétate de polyvinyle, ou
c) 70 à 1% en poids d'un additif sélecté du groupe d'amidon, et
d) 0 à 10% en poids d'additifs,
où les pourcentages spécifiés en poids concernent le poids sec du système à liant, c-à-d, sans l'eau, pour la consolidation des tissus textiles.

2. Utilisation selon la revendication 1, **caractérisée en ce que** le composant a) est l'acide polycarbonique, préférablement le polyacrylate, qui peut être réticulé par moyen d'un agent de réticulation.

3. Utilisation selon la revendication 2 **caractérisée en ce que** les acides poly-carboxiliques ont des constituants non saturés et/ou sont utilisés comme un mélange avec les constituants de l'acide carbonique monomère non saturé.

4. Utilisation selon la revendication 2 **caractérisée en ce que** les polyacrylates sont des polymères sur la base de monomères de l'acide acrylique et/ou de monomères de l'acide acrylique modifié, en particulier des monomères de l'acide méthacrylique.

5. Utilisation selon la revendication 1, **caractérisée en ce que** l'agent de réticulation est un polyol, une polyamine, une polyalcanolamine, un alcool polyvalent ou un mélange de ceux-ci.

6. Utilisation selon la revendication 1, **caractérisée en ce que** le composant b) est l'homopolymère de l'acétate vinyle et les co-ou les terpolymérisats de l'acétate de vinyle avec l'acide acrylique, les acrylates, l'acide crotonique, le lauréate de vinyle, la chlorure de vinyle ou l'éthylène.

7. Utilisation selon la revendication 1, **caractérisée en ce que** le composant b) est un acétate de polyvinyle dont le poids moléculaire (poids moyen) est entre 10000 et 1500000 g/mol.

8. Utilisation selon la revendication 1, **caractérisée en ce que** le total des composants a) à b) est jusqu'à 60% en poids, où le rapport (parties par poids) du composant a) au composant b) est entre 1:1 et 3:1, le plus préférablement 1,01:1 à 2:1, en particulier 1,1:1 à 1,6:1.

9. Utilisation selon la revendication 1, **caractérisée en ce que** le composant c) comprend l'amidon et les hydroxydes amphotères.

10. Utilisation selon la revendication 1, **caractérisée en ce qu'**il y a une dispersion et que la teneur en matières solides polymères de la dispersion, en particulier la teneur en matières solides polymères des dispersions, est entre 30 et 70% en poids.

11. Utilisation selon la revendication 1, **caractérisée en ce qu'**il y a une dispersion et que la viscosité de la dispersion, est de 10 à 3000 mPa*s.

12. Tissu textile qui a été consolidé par l'utilisation d'un système à liant selon l'une ou plusieurs des revendications 1 à 11 et comprend
a) 10 à 70% en poids de polycondensats sur la base d'acide carboxylique qui sont réticulés par moyen d'un agent de réticulation, et
b) 0 à 50% en poids d'acétate de polyvinyle, ou
c) 70 à 1% en poids d'un additif sélecté du groupe d'amidon, et
d) 0 à 10% en poids d'additifs,
où les pourcentages spécifiés en poids concernent le poids sec du système à liant, c-à-d, sans l'eau, et la quantité appliquée du système à liant est entre 5 et 35% en poids de liant sec rapporté au poids total du tissu textile non traité.

13. Tissu textile selon la revendication 12, **caractérisée en ce que** ledit tissu textile est un non tissé fait de fibres qui sont composés de polymères synthétiques, préférablement un tissu filé.

14. Tissu textile selon la revendication 12, **caractérisée en ce que** ledit tissu textile est un non tissé fait de fibres de verre et/ou de fibres minérales.

15. Tissu textile selon la revendication 12, **caractérisée en ce que** ledit tissu textile présente un poids total par l'unité de surface de 20 et 500 g/m².

16. Tissu textile selon la revendication 12, **caractérisée en ce que** le composant b) est l'homopolymère de l'acétate vinyle et les co-ou les terpolymérisats de l'acétate de vinyle avec l'acide acrylique, les acrylates, l'acide crotonique, le lauréate de vinyle, la chlorure de vinyle ou l'éthylène.

17. Tissu textile selon la revendication 12, **caractérisée en ce que** le composant b) est un acétate de polyvinyle dont le poids moléculaire (poids moyen) est entre 10000 et 1500000 g/mol.

18. Tissu textile selon la revendication 12, **caractérisée en ce que** le total des composants a) à b) est jusqu'à 60% en poids, où le rapport (parties par poids) du composant a) au composant b) est entre 1:1 1 et 3:1, le plus préférablement 1,01:1 à 2:1, en particulier 1,1:1 à 1,6:1.

19. Tissu textile selon la revendication 12, **caractérisée en ce que** le composant c) comprend l'amidon et les hydroxydes amphotères.

20. Matériau de revêtement pour membranes de sous-toiture, tôles de toiture et pellicules imperméables, supports textiles ou renforcements textiles dans les planchers, particulièrement dans les moquettes et planchers de PVC, comprenant au moins un tissu textile selon l'un ou plusieurs des revendications 12 à 19.

21. Matériau de revêtement selon la revendication 20, **caractérisée en ce qu'**il présente au moins un renforcement additionnel.

22. Membrane de sous-toiture revêtue, tôle de toiture et pellicule imperméable, comprenant au moins un composé de revêtement et au moins un tissu textile selon l'une ou plusieurs des revendications 12 à 19 ou un matériau de revêtement selon l'une des revendications 20 ou 21.

23. Plancher, en particulier une moquette ou un plancher de PVC, comprenant un support textile ou un renforcement textile comprenant au moins un tissu textile selon l'une ou plusieurs des revendications 12 à 19 ou un matériau de revêtement selon l'une des revendications 20 ou 21.
